(19) 

Europäisches Patentamt
European Patent Office
Office européen des brevets

(11) **EP 3 502 446 A1**

(12) **EUROPEAN PATENT APPLICATION**

(43) Date of publication:
**26.06.2019 Bulletin 2019/26**

(21) Application number: **18213314.0**

(22) Date of filing: **18.12.2018**

(51) Int Cl.:
**F02D 41/22** *(2006.01)*      **G05B 99/00** *(2006.01)*
**B62D 5/04** *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.12.2017 JP 2017242900**

(71) Applicant: **AISIN SEIKI KABUSHIKI KAISHA
Kariya-shi,
Aichi-ken 448-8650 (JP)**

(72) Inventors:
• **TAKASHIMA, Toru
KARIYA-SHI, AICHI-KEN, 448-8650 (JP)**
• **TSUJI, Takeru
KARIYA-SHI, AICHI-KEN, 448-8650 (JP)**

(74) Representative: **Cabinet Beau de Loménie
158, rue de l'Université
75340 Paris Cedex 07 (FR)**

(54) **TEMPERATURE ESTIMATION DEVICE**

(57)      A temperature estimation device (10) includes: a temperature measuring unit that measures surface temperatures of a plurality of different positions in a controller (20) controlling an operation of a drive source (30); and an estimation unit that estimates at least one of an outside air temperature in the vicinity of the controller (20) and an elapsed time between when the controller (20) is stopped and when the controller (20) starts to operate again based on the surface temperatures of the plurality of positions that are measured by the temperature measuring unit (10) when the controller (20) is stopped and when the controller (20) starts to operate again and respective thermal time constants ($\tau 1$, $\tau 2$) that indicate how easily heat is dissipated from the plurality of positions respectively.

*FIG.1*

EP 3 502 446 A1

## Description

TECHNICAL FIELD

An embodiment of this disclosure relates to a temperature estimation device.

BACKGROUND DISCUSSION

In a vehicle such as a four-wheel drive car in the related art, for example, an elapsed time between an ignition-off event and an ignition-on event is estimated based on the temperatures of heat generating positions such as a drive force transmitting device, a transfer, and a rear differential device and the outside air temperature at the time of an ignition-off event and the temperatures of the heat generating positions and the outside air temperature at the time of an ignition-on event. Then, after an engine which is a drive source is started, an overheat suppressing process for the heat generating positions is performed based on the result of the elapsed time estimation.

However, for example, in the case of JP 2017-87984A, it is necessary to install a temperature sensor in order to use the outside air temperature for estimation of an elapsed time. In addition, in a case where it is not possible to estimate the outside air temperature because of failure or the like of the temperature sensor, it is not possible to estimate an elapsed time between an ignition-off state and an ignition-on state and thus it is not possible to perform an appropriate overheat suppressing process for heat generating positions.

SUMMARY

A temperature estimation device according to an aspect of the disclosure includes a temperature measuring unit that measures surface temperatures of a plurality of different positions in a controller controlling an operation of a drive source and an estimation unit that estimates at least one of an outside air temperature in the vicinity of the controller and an elapsed time between when the controller is stopped and when the controller starts to operate again based on the surface temperatures of the plurality of positions that are measured by the temperature measuring unit when the controller is stopped and when the controller starts to operate again and respective thermal time constants that indicate how easily heat is dissipated from the plurality of positions respectively.

With this configuration, it is possible to estimate the outside air temperature without using a temperature sensor for measuring the outside air temperature. Furthermore, it is possible to more accurately estimate the elapsed time between when the controller is stopped and when the controller starts to operate again. In the aspect of this disclosure, the elapsed time between when the controller is stopped and when the controller starts to operate again may be estimated without estimating the outside air temperature.

In the temperature estimation device, for example, the plurality of positions may be positions in the controller that are different in easiness to be cooled when being left at the same surface temperature. With this configuration, it is possible to more accurately estimate an elapsed time between an ignition-off event and an ignition-on event.

In the temperature estimation device, for example, the plurality of positions may be positions where a change in temperature is great regardless of an operation state of the drive source. With this configuration, it is possible to more accurately estimate an elapsed time between an ignition-off event and an ignition-on event.

In the temperature estimation device, for example, the plurality of positions may be provided on respective surfaces of a plurality of heat sinks that are installed in the controller and are different from each other in heat dissipation performance. With this configuration, it is possible to more accurately estimate an elapsed time between an ignition-off event and an ignition-on event.

In the temperature estimation device, for example, the plurality of positions may be positions that are different from each other in distance to a heat source installed in the controller. With this configuration, changes in temperatures measured at the positions become significantly different from each other and thus it is possible to more accurately estimate an elapsed time between an ignition-off event and an ignition-on event.

BRIEF DESCRIPTION OF THE DRAWINGS

The foregoing and additional features and characteristics of this disclosure will become more apparent from the following detailed description considered with the reference to the accompanying drawings, wherein:

Fig. 1 is a hardware block diagram schematically illustrating a hardware configuration of a temperature estimation device according to an embodiment;
Fig. 2 is a sectional view of an ECU which illustrates an example of the installation positions of temperature sensors;
Fig. 3 is a functional block diagram illustrating an example of a functional configuration of the temperature estimation device;
Fig. 4 is a graph illustrating an example of a temporal change in temperature of two different positions in the ECU after stoppage of the ECU;
Fig. 5 is a graph illustrating a method of estimating an outside air temperature and an elapsed time after stoppage of the ECU;
Fig. 6 is a flowchart illustrating an example of the flow of a process of estimating the outside air temperature and the elapsed time after stoppage of the ECU;
Fig. 7 is an external view of the ECU illustrating a second example of temperature measurement positions on which the temperature sensors are installed; and

Fig. 8 is an external view of the ECU illustrating a third example of the temperature measurement positions on which the temperature sensors are installed.

DETAILED DESCRIPTION

Hereinafter, an embodiment disclosed here will be described with reference to drawings. The embodiment is an example in which the disclosure is applied as a temperature estimation device estimating the temperature of a motor controller that controls a drive motor of an electric power steering device installed in a vehicle. The temperature estimation device estimates the temperature of the motor controller which is an example of a heat generating position at the time of an ignition-on event. In addition, the temperature estimation device performs an appropriate overheat suppressing process with respect to the motor controller based on the estimated temperature.

Description on Hardware Configuration of Temperature Estimation Device

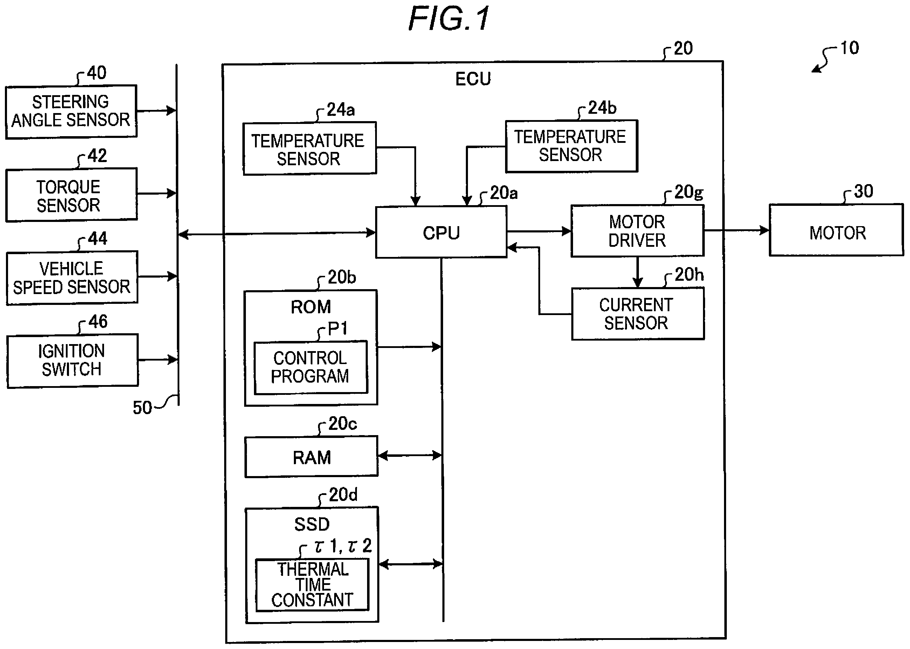

Fig. 1 is a hardware block diagram schematically illustrating a hardware configuration of a temperature estimation device 10. As illustrated in Fig. 1, the temperature estimation device 10 is provided with an ECU 20 which is a motor controller and a power steering drive motor 30 (hereinafter, simply referred to as motor 30).

The ECU 20 controls the rotation state of the motor 30 while measuring the operation state of a vehicle steering wheel (not shown in Fig. 1), a vehicle speed, and the like so as to exhibit an appropriate assist force with respect to a steering operation. In addition, at the time of an ignition-on event, the ECU 20 estimates the outside air temperature and an elapsed time after stoppage of the ECU 20 based on the surface temperature of the ECU 20. The ECU 20 is an example of a controller.

The ECU 20 is provided with a central processing unit (CPU) 20a, a read only memory (ROM) 20b, a random access memory (RAM) 20c, and a solid state drive (SSD) 20d. The CPU 20a performs various kinds of calculation (which will be described later) to control the entire temperature estimation device 10. The ROM 20b is a non-volatile storage device and stores a control program P1 or the like executed by the CPU 20a. The RAM 20c temporarily stores various kinds of data that the CPU 20a uses in a calculation process. The SSD 20d is a non-volatile rewritable storage unit and stores constants such as thermal time constants $\tau 1$ and $\tau 2$ (details will be described later) of the installation positions of temperature sensors 24a and 24b (which will be described later) and the output or the like of the temperature sensors 24a and 24b at the time of an ignition-off event. That is, the ECU 20 has a configuration like a general computer in which the control program P1 stored in the ROM 20b is executed with the RAM 20c used as a work area.

In addition, the ECU 20 is provided with the temperature sensors 24a and 24b, a motor driver 20g, and a current sensor 20h. The motor driver 20g generates a drive signal for the motor 30 and supplies the drive signal to the motor 30 so as to control the operation of the motor 30. An electric power control element such as a MOSFET or an insulated gate bipolar transistor (IGBT) constitutes the motor driver 20g, for example. The current sensor 20h measures the value of a current flowing in the motor driver 20g. The CPU 20a in the ECU 20 monitors the value of the current measured by the current sensor 20h. In addition, the CPU 20a controls the drive signal for the motor 30, which is generated by the motor driver 20g, such that the value of the current becomes a predetermined value.

The temperature sensors 24a and 24b are installed on a surface of a heat sink, which is installed on a surface of the CPU 20a of the ECU 20, a surface of an electric power control element provided in the motor driver 20g, or the like to promote heat dissipation of a heat generating portion, a surface of a substrate on which a circuit element is mounted, or the like. The temperature sensors 24a and 24b measure the surface temperatures of the installation positions thereof. The temperature sensors 24a and 24b are examples of a temperature measuring unit and a thermistor, a thermocouple or the like constitutes the temperature sensors.

It is desirable that the installation position of the temperature sensor 24a and the installation position of the temperature sensor 24b are positions that are different in easiness to be cooled. More specifically, it is desirable that the temperature sensors 24a and 24b are installed on positions that are different in thermal time constant which indicates the degree of response to temperature changes.

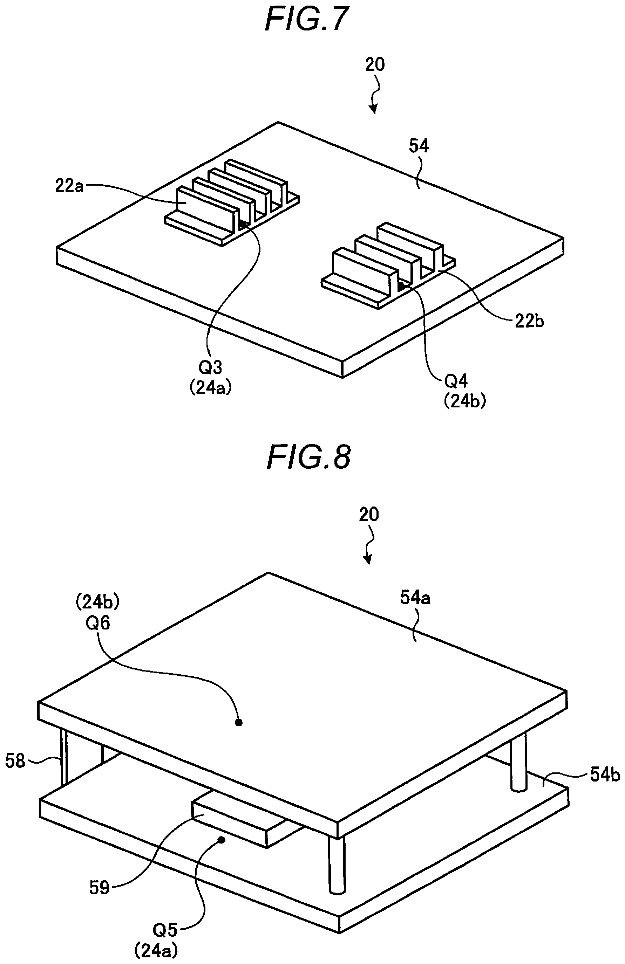

Specifically, the temperature sensors 24a and 24b may be installed on different heat sinks as illustrated in Fig. 7 which will be described later and the temperature sensors 24a and 24b may be installed on different positions on the same heat sink. In addition, the number of temperature sensors to be installed is not limited to two. That is, three or more temperature sensors 24a, 24b, 24c (not shown), ..., and the like may be installed on positions that are different in thermal time constant.

A signal or the like indicating the state of an ignition switch 46 is input to the ECU 20 via a network 50 such as a control area network (CAN) in addition to output signals from a steering angle sensor 40, a torque sensor 42, a vehicle speed sensor 44, or the like installed in the vehicle, for example.

The steering angle sensor 40 measures a steering angle which is determined by the direction of rotation of the steering wheel and the amount of rotation of the steering wheel. The torque sensor 42 measures a torque applied when a vehicle driver operates the steering wheel. The vehicle speed sensor 44 measures the vehicle speed of the vehicle. In addition, the ignition switch 46 is a switch that makes a vehicle drive source such as an engine or a motor operatable.

Description on Specific Example of Temperature Measurement Position

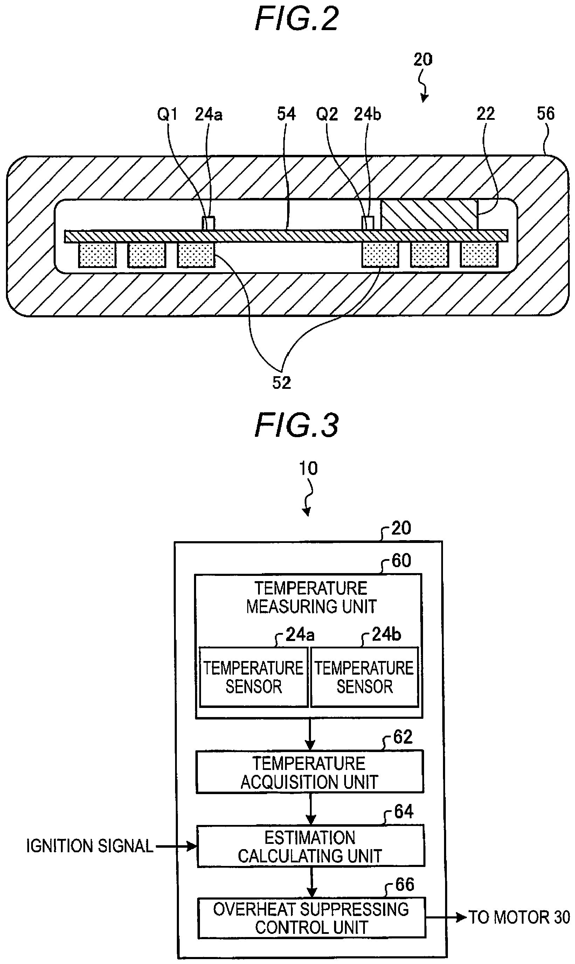

Next, a specific example of a temperature measurement position will be described with reference to Fig. 2. Fig. 2 is a sectional view of the ECU 20 which illustrates an example of the installation positions of the temperature sensors 24a and 24b.

As illustrated in Fig. 2, the ECU 20 is configured by causing an ECU substrate 54, on which a plurality of circuit elements 52 of the CPU 20a, the ROM 20b, the RAM 20c, the motor driver 20g, and the like are mounted, to be included in an ECU case 56. For an element that generates a particularly large amount of heat from among the circuit elements 52, a heat sink 22 that dissipates heat is installed. The heat sink 22 is formed of material having a high thermal conductivity such as aluminum or copper. The heat sink 22 may be installed to be in contact with the circuit element 52 by using a double-coated adhesive tape having a high thermal conductivity or may be installed on a surface opposite to the circuit element 52 with the ECU substrate 54 interposed threrebetween as illustrated in Fig. 2.

The temperature sensor 24a and the temperature sensor 24b are installed on a surface of the ECU substrate 54. In an example shown in Fig. 2, the temperature sensor 24a is installed on a temperature measurement position Q1. In addition, the temperature sensor 24b is installed on a temperature measurement position Q2. It is desirable that the temperature measurement position Q1 and the temperature measurement position Q2 are positions that are different in easiness to be cooled when being left at the same surface temperature as much as possible. In addition, it is desirable that the temperature measurement position Q1 and the temperature measurement position Q2 are positions where a change in temperature is great as much as possible. The reason for selecting the temperature measurement position Q1 and the temperature measurement position Q2 as described above will be described later.

The locations of the temperature measurement position Q1 and the temperature measurement position Q2 that are illustrated in Fig. 2 are merely an example and are not limited thereto. That is, although details will be described later, various locations as illustrated in Figs. 7 and 8 may be set as temperature measurement positions.

Description on Functional Configuration of Temperature Estimation Device

Next, a functional configuration of the temperature estimation device 10 will be described with reference to Fig. 3. Fig. 3 is a functional block diagram illustrating an example of a functional configuration of the temperature estimation device 10.

The ECU 20 of the temperature estimation device 10 realizes a temperature measuring unit 60, a temperature acquisition unit 62, an estimation calculating unit 64, and an overheat suppressing control unit 66 shown in Fig. 3 as functional units by deploying the control program P1 in the RAM 20c.

The temperature measuring unit 60 measures the surface temperature of the temperature measurement position Q1 by using the temperature sensor 24a. In addition, the temperature measuring unit 60 measures the surface temperature of the temperature measurement position Q2 by using the temperature sensor 24b.

The temperature acquisition unit 62 acquires the surface temperature of the temperature measurement position Q1 by reading the output of the temperature sensor 24a. In addition, the temperature acquisition unit 62 acquires the surface temperature of the temperature measurement position Q2 by reading the output of the temperature sensor 24b.

The estimation calculating unit 64 estimates an outside air temperature Ta of the vicinity of the ECU 20 and an elapsed time t between an ignition-off event and an ignition-on event based on the surface temperature of the temperature measurement position Q1 to which the temperature sensor 24a is attached and the surface temperature of the temperature measurement position Q2 to which the temperature sensor 24b is attached. More specifically, the estimation calculating unit 64 estimates the outside air temperatures Ta of the vicinities of the temperature sensors 24a and 24b and the elapsed time t between when the ignition switch 46 is turned off and when the ignition switch 46 is turned on (hereinafter, referred to as elapsed time t after turning off of ignition switch 46) based on the outputs of the temperature sensors 24a and 24b at the time of the ignition-off event and the outputs of the temperature sensors 24a and 24b at the time of the ignition-on event. The estimation calculating unit 64 is an example of an estimation unit.

The overheat suppressing control unit 66 predicts the overheat state of the motor 30 based on at least one of the outside air temperatures Ta and the elapsed time t after the turning off of the ignition switch 46 and performs control necessary for suppressing overheat of the motor 30. Specifically, the overheat suppressing control unit 66 predicts the temperatures of a coil and a stator constituting the motor 30. A method of predicting the temperatures of the coil and the stator of the motor 30 by using the outside air temperatures Ta and the elapsed time t after the turning off of the ignition switch 46 may be various proposed methods which are already known.

In a case where it is predicted that the motor 30 has reached the overheat limit as a result of prediction of the temperatures of the coil and the stator of the motor 30, the overheat suppressing control unit 66 stops the ECU 20 and stops the motor 30. In addition, in a case where it is predicted that the motor 30 is in an overheated state, the overheat suppressing control unit 66 performs control in which the drive torque of the motor 30 is reduced and an assist force with respect to a steering operation is reduced. Accordingly, heat generated by the ECU 20 and the motor 30 is suppressed. Furthermore, in a case where there is a possibility that the motor 30 reaches an overheat abnormality, the overheat suppressing control unit 66 lights an indicator (not shown in Fig. 1) to inform the vehicle driver that there is a possibility of overheat of the motor 30. When the motor 30 reaches the overheat limit and the overheat abnormality occurs, the 66 may store a fact that the motor 30 has reached the overheat limit and the overheat abnormality has occurred in the SSD 20d as a history (log). The stored history is read at the timing of vehicle inspection or the like and can be used for maintenance or the like of the electric power steering device.

Description on Temperature Estimation Method of Temperature Estimation Device

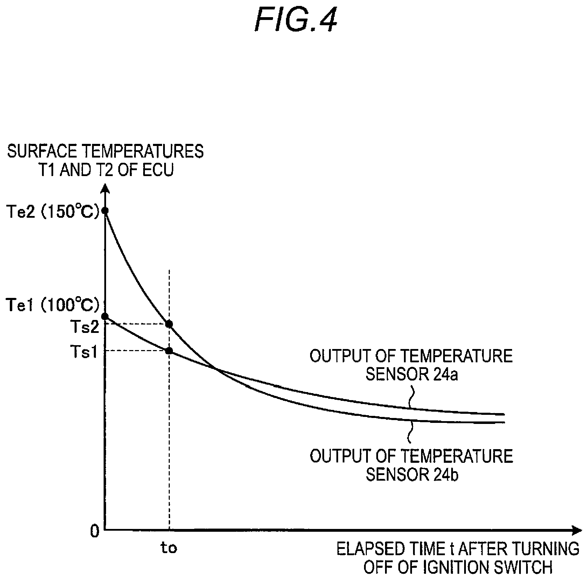

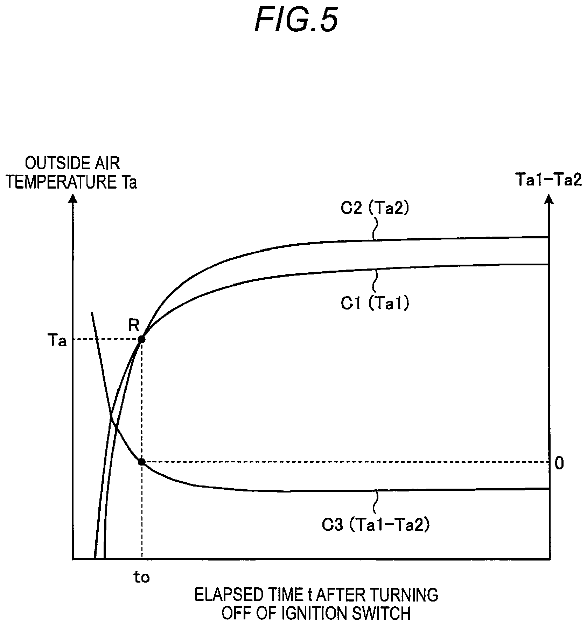

Next, a method by which the estimation calculating unit 64 of the temperature estimation device 10 estimates the outside air temperature Ta will be described with reference to Figs. 4 and 5. Fig. 4 is a graph illustrating an example of a temporal change in temperature of two different positions in the ECU 20 (position onto which temperature sensor 24a is attached (temperature measurement position Q1 in Fig. 2) and position onto which temperature sensor 24b is attached (temperature measurement position Q2 in Fig. 2)) after stoppage of the ECU 20. Fig. 5 is a graph illustrating a method of estimating the outside air temperature and an elapsed time after stoppage of the ECU 20.

First, the description on Fig. 4 will be made. From among the surface temperatures of the ECU 20 measured by the temperature sensor 24a, the surface temperature of the ECU 20 at the time of the ignition-off event (that is, at time t=0 when ignition switch 46 is turned off) will be referred to as Te1. In addition, the surface temperature of the ECU 20 at the time of the ignition-on event (that is, at time of turning on of ignition switch 46) will be referred to as Ts1. From among the surface temperatures of the ECU 20 measured by the temperature sensor 24b, the surface temperature of the ECU 20 at the time of the turning off of the ignition switch 46 will be referred to as Te2. In addition, the surface temperature of the ECU 20 at the time of the turning on of the ignition switch 46 will be referred to as Ts2. Furthermore, the outside air temperatures of the vicinities of the installation positions of the temperature sensors 24a and 24b will be referred to as Ta and the elapsed time after the turning off of the ignition switch 46 will be referred to as t.

When a thermal time constant of the installation position of the temperature sensor 24a (temperature measurement position Q1) is $\tau 1$, the surface temperature T1 of the ECU 20 at the installation position in relation to the elapsed time t after the turning off of the ignition switch 46 can be represented by Equation 1, generally.

$$T1 = (Te1\text{-}Ta)e^{-t/\tau1}+Ta \ldots \text{Equation 1}$$

Similarly, when a thermal time constant of the installation position of the temperature sensor 24b (temperature measurement position Q2) is $\tau 2$, the surface temperature T2 of the ECU 20 at the installation position in relation to the elapsed time t after the turning off of the ignition switch 46 can be represented by Equation 2, generally.

$$T2 = (Te2\text{-}Ta)e^{-t/\tau2}+Ta \ldots \text{Equation 2}$$

Fig. 4 illustrates an example of Equation 1 in which Te1=100°C and an example of Equation 2 in which Te2=150°C.

As illustrated in Fig. 4, when the ignition switch 46 is turned off, the surface temperature T1 of the ECU 20 gradually decreases from Te1=100°C corresponding to the elapsed time t after the turning off of the ignition switch 46. A time taken for the surface temperature T1 to decrease depends on the thermal time constant $\tau 1$.

When the ignition switch 46 is turned off, the surface temperature T2 of the ECU 20 gradually decreases from Te2=150°C corresponding to the elapsed time t after the turning off of the ignition switch 46. A time taken for the surface temperature T2 to decrease depends on the thermal time constant $\tau 2$.

Since the thermal time constant $\tau 1$ and the thermal time constant $\tau 2$ are generally different from each other, the surface temperatures T1 and T2 of the ECU 20 decrease at different slopes to reach the outside air temperature Ta at that time. In addition, the estimation calculating unit 64 estimates the elapsed time t after the turning off of the ignition switch 46 as illustrated in Fig. 4 based on a fact that the surface temperature of the ECU 20 measured by the temperature sensor 24a when the ignition switch 46 is turned on is Ts1 and the surface temperature of the ECU 20 measured by the temperature sensor 24b when the ignition switch 46 is turned on is Ts2.

More specifically, the estimation calculating unit 64 calculates the outside air temperature Ta and the elapsed time t by solving Equation 1 and Equation 2 as simultaneous equations in which the outside temperature Ta and the elapsed time t are the unknowns. Fig. 5 qualitatively illustrates a process of solving Equation 1 and Equation 2 as the simultaneous equations. That is, a curve C1 shown in Fig. 5 represents a change in outside air temperature Ta1, which is the result of solving Equation 1 with respect to the outside air temperature Ta. In addition, a curve C2 represents a change in outside air temperature Ta2, which is the result of solving Equation 2 with respect to the outside air temperature Ta.

In Fig. 5, it can be regarded that a point R at which the curve C1 and the curve C2 intersect each other represents an elapsed time to between when the ignition switch 46 is turned off and when the ignition switch 46 is turned on. In Fig. 5, the outside air temperature Ta represented by the point R corresponds to the outside air temperature at the time of the turning on of the ignition switch 46.

A curve C3 shown in Fig. 5 represents the result of calculating a differential value Ta1-Ta2 with respect to the curve C1 and the curve C2. The curve C3 represents that the differential value Ta1-Ta2 is zero at the elapsed time to corresponding to the point R.

The estimation calculating unit 64 estimates that a time at which the differential value between the curve C1 and the curve C2 becomes zero (that is, time represented by intersection point between curve C1 and curve C2 in graph in Fig. 5) is the elapsed time to between when the ignition switch 46 is turned off and when the ignition switch 46 is turned on. Then, the estimation calculating unit 64 estimates that the outside air temperature at that time is Ta.

Since the thermal time constant $\tau1$ of the temperature measurement position Q1 and the thermal time constant $\tau2$ of the temperature measurement position Q2 are different from each other, the surface temperatures T1 and T2 of the two positions shown in Fig. 4 change at different slopes. At this time, the greater the difference between the states of change of the surface temperatures T1 and T2 of the two positions is, that is, the greater the difference between a change in temperature of the temperature measurement position Q1 and a change in temperature of the temperature measurement position Q2 is, the higher the time estimation accuracy is. That is, in a case where the surface temperature T1 and the surface temperature T2 intersect each other at a large angle (angle close to 90°), it is possible to estimate the elapsed time t after turning off of the ignition switch 46 at a high accuracy in comparison with a case where the surface temperature T1 and the surface temperature T2 intersect each other at a small angle (angle close to 0°). Accordingly, as described above, it is desirable that the temperature measurement position Q1 and the temperature measurement position Q2 are positions that are different in easiness to be cooled when being left at the same surface temperature as much as possible. In addition, as described above, it is desirable that the temperature measurement position Q1 and the temperature measurement position Q2 are positions where a change in temperature is great as much as possible.

To solve Equation 1 and Equation 2 as simultaneous equations, it is necessary to determine the values of the thermal time constants $\tau1$ and $\tau2$ in advance. Therefore, the values of the thermal time constants $\tau1$ and $\tau2$ are acquired in advance through an experiment.

Specifically, after the ECU 20 is operated until the ECU substrate 54 reaches a predetermined temperature, the ECU 20 is turned off to be stopped and changes in temperature of the temperature measurement position Q1 and the temperature measurement position Q2 are measured. Then, the values of the thermal time constants $\tau1$ and $\tau2$ are determined based on the measured changes in temperature. The determined thermal time constants $\tau1$ and $\tau2$ are stored in the SSD 20d (refer to Fig. 1), for example.

Description on Flow of Process of Estimating Outside Air Temperature and Elapsed Time after Stoppage of ECU

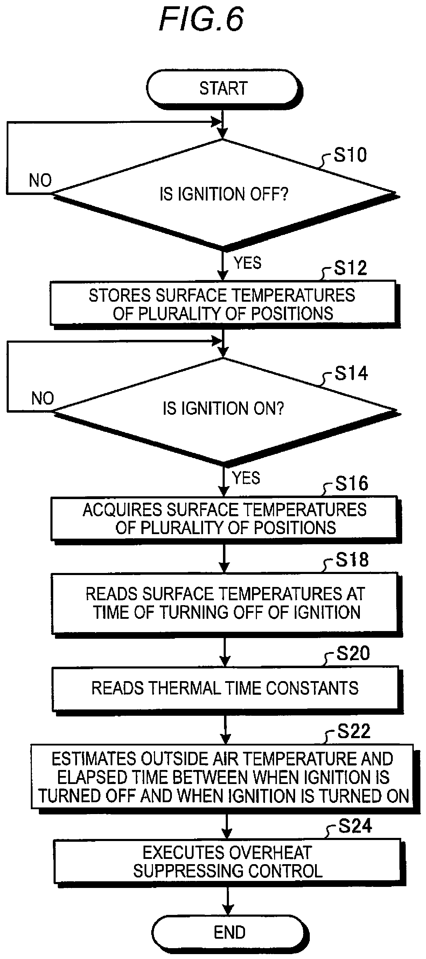

Next, the flow of a temperature process will be specifically described with reference to Fig. 6. Fig. 6 is a flowchart illustrating an example of the flow of a process of estimating the outside air temperature and an elapsed time after stoppage of the ECU 20. Hereinafter, the outline of each process will be described.

First, the estimation calculating unit 64 determines whether the ignition is off (step S10). Whether the ignition is off may be determined based on whether the state of the ignition switch 46 is changed from a turned-on state to a turned-off state. When it is determined that the ignition is off (Step S10: Yes), the process proceeds to Step S12 and when it is not determined that the ignition is off (Step S10: No), the determination in Step S10 is repeated.

Next, the estimation calculating unit 64 acquires the surface temperatures of a plurality of positions at the time of turning off of the ignition from the temperature acquisition unit 62 and stores the surface temperatures in the SSD 20d (Step S12).

The estimation calculating unit 64 determines whether the ignition is on (Step S14). Whether the ignition is on may be determined based on whether the state of the ignition switch 46 is changed from a turned-off state to a turned-on state. When it is determined that the ignition is on (Step S14: Yes), the process proceeds to Step S16 and when it is not determined that the ignition is on (Step S14: No), the determination in Step S14 is repeated.

The temperature acquisition unit 62 acquires the surface temperatures Ts1 and Ts2 of the plurality of positions at the time of turning on of the ignition from the temperature sensors 24a and 24b (Step S16).

The estimation calculating unit 64 reads the surface temperatures Te1 and Te2 of the plurality of positions at the time of the turning off of the ignition from the SSD 20d (Step S18).

Furthermore, the estimation calculating unit 64 reads the thermal time constants $\tau1$ and $\tau2$ from the SSD 20d (Step S20).

The estimation calculating unit 64 estimates the outside air temperature Ta and the elapsed time to between when the ignition is turned off and when the ignition is turned on (Step S22).

The overheat suppressing control unit 66 performs overheat suppressing control based on at least one of the surface temperatures Ts1 and Ts2, the surface temperatures Te1 and Te2, and the elapsed time to between when the ignition is turned off and when the ignition is turned on (Step S24).

Description on Other Example of Temperature Measurement Position

The locations of the temperature measurement positions Q1 and Q2 are not limited to those described in the embodiment. Hereinafter, another example of the temperature measurement positions Q1 and Q2 will be described.

Fig. 7 is an external view of the ECU 20 illustrating a second example of temperature measurement positions on which the temperature sensors 24a and 24b are installed. Two heat sinks 22a and 22b are installed on the ECU substrate 54 constituting the ECU 20. The heat sinks 22a and 22b are formed of the same material, are the approximately same as each other in mass, and are different from each other in surface area. For example, the heat sinks 22a and 22b are different from each other in the number of fins and are different from each other in heat dissipation performance.

In Fig. 7, a temperature measurement position Q3 is provided on a surface of the heat sink 22a and the temperature sensor 24a is installed thereon. In addition, a temperature measurement position Q4 is provided on a surface of the heat sink 22b and the temperature sensor 24b is installed thereon. Since the two heat sinks 22a and 22b are formed of the same material, are the approximately same as each other in mass, and are different from each other in surface area, a thermal time constant $\tau1$ of the temperature measurement position Q3 and thermal time constant $\tau2$ of the temperature measurement position Q4 are different from each other. In the case of such a configuration, the temperature sensors 24a and 24b are installed on positions that are different from each other in easiness to be cooled when being left at the same surface temperature and thus it is possible to accurately estimate the outside air temperature Ta and the elapsed time to between when the ignition switch 46 is turned off and when the ignition switch 46 is turned on.

Instead of adopting a configuration shown in Fig. 7, the heat sinks 22a and 22b may have the same surface area and may be formed of different materials. For example, the heat sink 22a may be formed of aluminum while the heat sink 22b is formed of copper. In the case of such a configuration, the temperature measurement positions on which the heat sinks 22a and 22b are installed can be made different from each other in thermal time constant. Therefore, it is possible to accurately estimate the outside air temperature Ta and the elapsed time to between when the ignition switch 46 is turned off and when the ignition switch 46 is turned on. In addition, the heat sink 22a and the heat sink 22b may be different from each other in mass and may have the approximately same surface area. In the case of such a configuration also, the temperature measurement positions on which the heat sinks 22a and 22b are installed can be made different from each other in thermal time constant. Therefore, it is possible to accurately estimate the outside air temperature Ta and the elapsed time to between when the ignition switch 46 is turned off and when the ignition switch 46 is turned on.

The installation positions of the temperature sensors 24a and 24b are not limited to the surfaces of the heat sinks. Fig. 8 is an external view of the ECU 20 illustrating a third example of temperature measurement positions on which the temperature sensors 24a and 24b are installed. In an example shown in Fig. 8, the ECU 20 is provided with a control substrate 54a and a power source substrate 54b. Calculation elements such as a CPU, a ROM, a RAM, and an SSD are mounted on the control substrate 54a. A drive element such as a power source IC 59 is mounted on the power source substrate 54b. In addition, the control substrate 54a and the power source substrate 54b are connected to each other via a busbar 58, which is a conductive member.

In the ECU 20 described as above, a temperature measurement position Q5 is provided in the vicinity of the power source IC 59 which is a heat source and the temperature sensor 24a is installed thereon. In addition, a temperature measurement position Q6 is provided on the control substrate 54a separated from the heat source and the temperature sensor 24b is installed thereon. In the case of such a configuration, the temperature measurement positions Q5 and Q6 are different from each other in distance to the heat source. Therefore, a change in temperature measured at the temperature measurement position Q6 is smaller than a change in temperature measured at the temperature measurement position Q5 and thus two curves described in Fig. 4 intersect each other at a larger angle. Accordingly, it is possible to accurately estimate the outside air temperature Ta and the elapsed time to between when the ignition switch 46 is turned off and when the ignition switch 46 is turned on.

As described above, according to the temperature estimation device 10 in the embodiment, the temperature sensors 24a and 24b (temperature measuring unit 60), which are installed on the plurality of different positions (temperature measurement positions Q1 and Q2) in the ECU 20 (controller) controlling the operation of a drive source, measure the surface temperatures Te1 and Te2 of the temperature measurement positions Q1 and Q2 when the ECU 20 is stopped. In addition, the temperature sensors 24a and 24b measure the surface temperatures Ts1 and Ts2 of the temperature measurement positions Q1 and Q2 when the ECU 20 starts to operate. The estimation calculating unit 64 (estimation unit) estimates at least one of the outside air temperature Ta in the vicinity of the ECU 20 and the elapsed time to between when the ECU 20 is stopped and when the ECU 20 starts to operate again based on the surface temperatures Te1 and Te2, the surface temperatures Ts1 and Ts2, the thermal time constant $\tau1$ which indicates how easily heat is dissipated from the temperature measurement position Q1, and the thermal time constant $\tau 2$ which indicates how easily heat is dissipated from the temperature measurement position Q2. Therefore, it is possible to estimate the outside air temperature Ta without using a temperature sensor for measuring the outside air temperature Ta.

In addition, according to the temperature estimation device 10 in the embodiment, the temperature measurement positions Q1 and Q2 are positions in the ECU 20 (controller) that are different in easiness to be cooled when being left at the same surface temperature. Therefore, there is a difference between a change in temperature at the temperature measurement position Q1 and a change temperature at the temperature measurement position Q2 and thus it is possible to more accurately estimate the elapsed time to between the ignition-off event and the ignition-on event.

In addition, according to the temperature estimation device 10 in the embodiment, the temperature measurement positions Q1 and Q2 are positions where a change in temperature is great regardless of the operation state of a drive source, the operation of which is controlled by the ECU 20 (controller). Therefore, there is a difference between a change in temperature at the temperature measurement position Q1 and a change temperature at the temperature measurement position Q2 and thus it is possible to more accurately estimate the elapsed time to between the ignition-off event and the ignition-on event.

In addition, according to the temperature estimation device 10 in the embodiment, the temperature measurement positions Q1 and Q2 are provided on respective surfaces of the plurality of heat sinks 22a and 22b, which are installed in the ECU 20 (controller) and are different from each other in heat dissipation performance. Therefore, there is a difference between a change in temperature at the temperature measurement position Q1 and a change temperature at the temperature measurement position Q2 and thus it is possible to more accurately estimate the elapsed time to between the ignition-off event and the ignition-on event.

In addition, according to the temperature estimation device 10 in the embodiment, the temperature measurement positions Q1 and Q2 are positions that are different from each other in distance to the heat source installed in the ECU 20 (controller). Therefore, there is a difference between a change in temperature at the temperature measurement position Q1 and a change temperature at the temperature measurement position Q2 and thus it is possible to more accurately estimate the elapsed time to between the ignition-off event and the ignition-on event.

The temperature estimation device 10 in the embodiment is an example of application to the ECU 20 controlling the operation of the power steering drive motor 30. However, the application example is not limited thereto. That is, as long as the ECU 20 generates heat, application can be made regardless of the purpose.

In addition, the control program P1 executed by the ECU 20 in the embodiment may be provided by being recorded in a computer-readable recording medium such as a CD-ROM, a flexible disk (FD), a CD-R, and a digital versatile disk (DVD) in the form of an installable or executable file.

Furthermore, the control program P1 executed by the ECU 20 in the embodiment may be provided by being stored in a computer connected to a network such as the internet and by being downloaded via the network. In addition, the control program P1 executed by the ECU 20 in the embodiment may be provided or distributed via a network such as the internet.

While the embodiment has been described, the embodiment and the modification example are merely an example and are not intended to limit the scope of the disclosure. The embodiment and the modification example may be embodied in a variety of other forms and various omissions, substitutions, combinations, and changes may be made without departing from the spirit of the disclosure. In addition, configurations and shapes in the embodiment and the modification example may be partially substituted and implemented.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

**Claims**

1. A temperature estimation device (10) comprising:

   a temperature measuring unit (60) configured to measure surface temperatures of a plurality of different positions in a controller (20) configured to control an operation of a drive source (30); and an estimation unit (64) configured to estimate at least one of an outside air temperature (Ta) in the vicinity of the controller (20) and an elapsed time (t) between when the controller (20) is stopped and when the controller (20) starts to operate again based on the surface temperatures of the plurality of positions that are measured by the temperature measuring unit (60) when the controller (20) is stopped and when the controller (20) starts to operate again and respective thermal time constants ($\tau 1$, $\tau 2$) that indicate how easily heat is dissipated from the plurality of positions respectively.

2. The temperature estimation device (10) according to claim 1,
   wherein the plurality of positions are positions in the controller (20) that are different in easiness to be cooled when being left at the same surface temperature.

3. The temperature estimation device according to claim 1 or 2,
   wherein the plurality of positions are positions where a change in temperature is great regardless of an operation state of the drive source (30).

4. The temperature estimation device according to claim 1 or 2,
   wherein the plurality of positions are provided on respective surfaces of a plurality of heat sinks (22, 22a, 22b) that are installed in the controller (20) and are different from each other in heat dissipation performance.

5. The temperature estimation device according to claim 1 or 2,
   wherein the plurality of positions are positions that are different from each other in distance to a heat source installed in the controller (20).

## FIG.1

EP 3 502 446 A1

## FIG.2

## FIG.3

# FIG.4

SURFACE TEMPERATURES
T1 AND T2 OF ECU

Te2 (150°C)

Te1 (100°C)
Ts2
Ts1

OUTPUT OF TEMPERATURE
SENSOR 24a

OUTPUT OF TEMPERATURE
SENSOR 24b

0

to

ELAPSED TIME t AFTER TURNING
OFF OF IGNITION SWITCH

# FIG.5

## FIG.6

```
          ┌─────────────┐
          │    START    │
          └──────┬──────┘
                 │
    ┌────────────▼──────────┐  S10
    │                       │
  NO│      IS IGNITION OFF? │
    │                       │
    └────────────┬──────────┘
                 │ YES
    ┌────────────▼──────────┐  S12
    │ STORES SURFACE         │
    │ TEMPERATURES OF        │
    │ PLURALITY OF POSITIONS │
    └────────────┬──────────┘
                 │
    ┌────────────▼──────────┐  S14
    │                       │
  NO│      IS IGNITION ON?  │
    │                       │
    └────────────┬──────────┘
                 │ YES
    ┌────────────▼──────────┐  S16
    │ ACQUIRES SURFACE       │
    │ TEMPERATURES OF        │
    │ PLURALITY OF POSITIONS │
    └────────────┬──────────┘
                 │
    ┌────────────▼──────────┐  S18
    │ READS SURFACE          │
    │ TEMPERATURES AT TIME   │
    │ OF TURNING OFF OF      │
    │ IGNITION               │
    └────────────┬──────────┘
                 │
    ┌────────────▼──────────┐  S20
    │ READS THERMAL TIME     │
    │ CONSTANTS              │
    └────────────┬──────────┘
                 │
    ┌────────────▼──────────┐  S22
    │ ESTIMATES OUTSIDE AIR  │
    │ TEMPERATURE AND        │
    │ ELAPSED TIME BETWEEN   │
    │ WHEN IGNITION IS       │
    │ TURNED OFF AND WHEN    │
    │ IGNITION IS TURNED ON  │
    └────────────┬──────────┘
                 │
    ┌────────────▼──────────┐  S24
    │ EXECUTES OVERHEAT      │
    │ SUPPRESSING CONTROL    │
    └────────────┬──────────┘
                 │
          ┌──────▼──────┐
          │     END     │
          └─────────────┘
```

## FIG.7

## FIG.8

Europäisches
Patentamt

European
Patent Office

Office européen
des brevets

**EUROPEAN SEARCH REPORT**

Application Number

EP 18 21 3314

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/147017 A1 (ISHII MASATOSHI [JP] ET AL) 25 May 2017 (2017-05-25) * paragraphs [0037] - [0043], [0100] - [0105], [0117], [0121]; claims 1-7; figures 1-14,18 * | 1-5 | INV. F02D41/22 G05B99/00 B62D5/04 |
| X | EP 2 781 901 A1 (EIZO CORP [JP]) 24 September 2014 (2014-09-24) * paragraph [0077]; claims 1,2; figure 1 * | 1 | |
| A | US 7 619 859 B2 (MITSUBISHI ELECTRIC CORP [JP]) 17 November 2009 (2009-11-17) * claims 1-4,9,12; figures 1-7 * | 1-5 | |
| A | WO 2017/207066 A1 (THYSSENKRUPP PRESTA AG [LI]; THYSSENKRUPP AG [DE]) 7 December 2017 (2017-12-07) * page 5, line 28 - page 6, line 18; claim 1; figures 1,2 * * page 7, line 11 - page 8, line 18 * | 1-5 | |
| A | WO 2015/041251 A1 (HITACHI AUTOMOTIVE SYSTEMS LTD [JP]) 26 March 2015 (2015-03-26) * paragraphs [0027] - [0035]; figures 1-4 * | 1-5 | TECHNICAL FIELDS SEARCHED (IPC) F02D G05B B60G B62D |
| A,D | JP 2017 087984 A (JTEKT CORP) 25 May 2017 (2017-05-25) * paragraphs [0046], [0047]; claim 1; figures 1-4 * | 1-5 | |
| A | EP 1 964 754 A1 (HONDA MOTOR CO LTD [JP]) 3 September 2008 (2008-09-03) * paragraphs [0031], [0089] - [0091]; figures 1,5,6 * | 1-5 | |

-/--

The present search report has been drawn up for all claims

| Place of search | Date of completion of the search | Examiner |
|---|---|---|
| The Hague | 10 May 2019 | Boye, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 18 21 3314

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 061 691 A1 (TOYOTA MOTOR CO LTD [JP]) 27 May 2009 (2009-05-27) * paragraphs [0040] - [0042]; claims 1-6; figures 1-13 * | 1-5 | |
| A | JP H11 20718 A (KOMATSU MFG CO LTD) 26 January 1999 (1999-01-26) * abstract; claim 1; figure 1 * | 1 | |
| A | US 2016/187272 A1 (ISHII MASATOSHI [JP] ET AL) 30 June 2016 (2016-06-30) * paragraphs [0068], [0071]; claim 1; figure 1 * | 1 | |

TECHNICAL FIELDS
SEARCHED (IPC)

The present search report has been drawn up for all claims

| Place of search | Date of completion of the search | Examiner |
|---|---|---|
| The Hague | 10 May 2019 | Boye, Michael |

EPO FORM 1503 03.82 (P04C01)

# EP 3 502 446 A1

## ANNEX TO THE EUROPEAN SEARCH REPORT
## ON EUROPEAN PATENT APPLICATION NO.

EP 18 21 3314

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2019

| Patent document cited in search report | | Publication date | Patent family member(s) | | Publication date |
|---|---|---|---|---|---|
| US 2017147017 | A1 | 25-05-2017 | JP 2017097592 A | | 01-06-2017 |
| | | | US 2017147017 A1 | | 25-05-2017 |
| EP 2781901 | A1 | 24-09-2014 | AU 2012338158 A1 | | 05-06-2014 |
| | | | AU 2015200858 A1 | | 12-03-2015 |
| | | | CN 103959027 A | | 30-07-2014 |
| | | | EP 2781901 A1 | | 24-09-2014 |
| | | | ES 2674444 T3 | | 29-06-2018 |
| | | | JP 5080681 B1 | | 21-11-2012 |
| | | | JP 2013108801 A | | 06-06-2013 |
| | | | RU 2014120001 A | | 27-12-2015 |
| | | | US 2014354185 A1 | | 04-12-2014 |
| | | | WO 2013073221 A1 | | 23-05-2013 |
| US 7619859 | B2 | 17-11-2009 | CN 101058318 A | | 24-10-2007 |
| | | | CN 101565054 A | | 28-10-2009 |
| | | | DE 102006053522 A1 | | 08-11-2007 |
| | | | JP 4296186 B2 | | 15-07-2009 |
| | | | JP 2007283971 A | | 01-11-2007 |
| | | | US 2007247766 A1 | | 25-10-2007 |
| WO 2017207066 | A1 | 07-12-2017 | CN 109313086 A | | 05-02-2019 |
| | | | EP 3465117 A1 | | 10-04-2019 |
| | | | WO 2017207066 A1 | | 07-12-2017 |
| WO 2015041251 | A1 | 26-03-2015 | JP 2015059550 A | | 30-03-2015 |
| | | | WO 2015041251 A1 | | 26-03-2015 |
| JP 2017087984 | A | 25-05-2017 | NONE | | |
| EP 1964754 | A1 | 03-09-2008 | EP 1964754 A1 | | 03-09-2008 |
| | | | JP 4603561 B2 | | 22-12-2010 |
| | | | JP 2008207684 A | | 11-09-2008 |
| | | | US 2008203690 A1 | | 28-08-2008 |
| EP 2061691 | A1 | 27-05-2009 | CN 101516714 A | | 26-08-2009 |
| | | | EP 2061691 A1 | | 27-05-2009 |
| | | | JP 4297144 B2 | | 15-07-2009 |
| | | | JP 2008068844 A | | 27-03-2008 |
| | | | RU 2009109154 A | | 20-10-2010 |
| | | | US 2009276121 A1 | | 05-11-2009 |
| | | | WO 2008032197 A1 | | 20-03-2008 |
| JP H1120718 | A | 26-01-1999 | NONE | | |
| US 2016187272 | A1 | 30-06-2016 | NONE | | |

EPO FORM P0459

For more details about this annex : see Official Journal of the European Patent Office, No. 12/82

page 1 of 2

18

**ANNEX TO THE EUROPEAN SEARCH REPORT
ON EUROPEAN PATENT APPLICATION NO.**

EP 18 21 3314

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2019

| Patent document cited in search report | Publication date | Patent family member(s) | Publication date |
|---|---|---|---|

------------------------------------------------------------------------------

EPO FORM P0459

For more details about this annex : see Official Journal of the European Patent Office, No. 12/82

page 2 of 2

**EP 3 502 446 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017087984 A